# EUROPÄISCHE PATENTSCHRIFT

(11) **EP 0 795 265 B1**
(45) Veröffentlichungstag und Bekanntmachung des Hinweises auf die Patenterteilung: **16.08.2000**
(21) Anmeldenummer: 97102477.3
(22) Anmeldetag: 15.02.1997
(51) Int. Cl.: A01B 59/042

(54) **Anhängevorrichtung**
Hitch device
Dispositif d'attelage

(30) Priorität: 06.03.1996 DE 19608579
(43) Veröffentlichungstag der Anmeldung: 17.09.1997
(73) Patentinhaber: DEERE & COMPANY, Moline, Illinois 61265-8098 (US)
(72) Erfinder: Franet, Roger, 57200 Sarreguemines (FR)
(74) Vertreter: Feldmann, Bernhard

(56) Entgegenhaltungen:
- EP-A- 0 269 166
- EP-A- 0 540 912
- DE-A- 1 557 877
- DE-A- 3 619 045
- DE-C- 940 430
- DE-C- 957 796
- DE-U- 29 509 661
- GB-A- 2 123 267
- NL-A- 8 700 863
- US-A- 4 087 111
- US-A- 4 776 606

## Beschreibung

Die Erfindung betrifft eine Anhängevorrichtung für ein gezogenes Gerät mit einem Rahmen zum vertikal schwenkbaren Anschluß an ein und gegenüber einem Zugfahrzeug und einem Teil zum Anschluß an das Gerät.

Die EP-B1-0 196 427 offenbart ein auf zwei Rädern fahrbares Mähgerät mit einer Deichsel, die über eine Anhängevorrichtung an einen Ackerschlepper anschließbar ist. Die Anhängevorrichtung ist ackerschlepperseitig nur an die Unterlenker angeschlossen und kann somit gegenüber dem Ackerschlepper vertikal schwenken. Geräteseitig ist ein Teil mit zwei U-förmigen Anschlußelementen mit jeweils einer Schwenkachse vorgesehen, die einen kardanähnlichen Anschluß des mit den Unterlenkern verbundenen Rahmens mit der Deichsel herstellen. Während das mit dem Rahmen vertikal schwenkbar verbundene Anschlußelement nach unten offen ist, ist das starr mit ihm verbundene und den vorderen Endbereich der Deichsel aufnehmende Anschlußelement nach hinten offen, wobei ein erstes Glied oberhalb und ein zweites Glied unterhalb der Deichsel jeweils an einer Schwenkachse angreift.

Aus der DE-A1-42 36 166 geht eine Anhängevorrichtung hervor, die einen an die Drei-Punkt-Hydraulik angeschlossenen Anschlußrahmen enthält, der über eine Kugelkupplung an einen Schwenkzapfen an der Unterseite einer Deichsel anschließbar ist.

Diese Anhängevorrichtung benötigt eine Drei-Punkt-Gerätekupplung DE 29 509 661 beschreibt eine Anhängevorrichtung gemäß Oberbegriff des Anspruchs 1.

Das der Erfindung zugrunde liegende Problem wird in dem Erfordernis zweier Schwenkvorrichtungen oder einer Drei-Punkt-Gerätekupplung gesehen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird mittels des Rahmens und eines der Glieder die Gewichts- und Zugkraft des Geräts übertragen, während das andere in verschiedenen Richtungen bewegliche Glied lediglich den Rahmen an dem Teil abstützt und seine Stellung während der horizontalen oder vertikalen bzw. gemischten Schwenkbewegung kontrolliert. Es ist dabei wichtig, daß der Rahmen in einer vertikalen Ebene gegenüber dem Zugfahrzeug schwenken kann. Hierzu ist allerdings nicht unbedingt eine Zwei- oder Drei-Punkt-Gerätekupplung erforderlich; ein anderer nicht höhenverstellbarer Anschluß oder ein Anschluß an eine Maschine anstatt einen Ackerschlepper ist ebenfalls möglich. Es bedarf nicht mehr zweier Schwenklager und die Bewegungsfreiheit wird erhöht. Schließlich ist ein derartiges Glied einfacher und günstiger herzustellen als die kardanisch miteinander verbundenen U-förmigen Anschlußelemente.

Die Abstützung des Rahmens an dem Teil über das andere Glied erfolgt je nach der Lage des hauptsächlichen Angriffspunktes auf Zug oder auf Druck. Bei einer auf Druck wirkenden Abstützung kann ein in sich starrer Lenker, z. B. eine Stahlplatte verwendet werden, die endseitig mittels Kugelkupplungen oder dergleichen an dem Rahmen und dem Teil angreift. Anstelle der Kugelkupplungen können allerdings auch andere Maschinenelemente verwendet werden, die eine Schwenkbewegung in verschiedenen Richtungen zulassen, z. B. ein verdrehbares Gestänge oder eine elastische Platte.

Wenn das andere Glied hingegen Zugkräfte aufnehmen muß, kommt neben einer Stange oder einer Platte auch jedes andere Verbindungselement infrage, das seine Länge nicht vergrößert und eine Schwenkbewegung in verschiedenen Richtungen zuläßt, z. B. ein Seil, eine Kette, miteinander verbundene Laschen oder eine starke Zugfeder. Wenn ein Seil oder eine Kette verwendet wird, sollte allerdings auch ein Anschlag vorgesehen werden, an dem der Rahmen zur Anlage kommen kann, wenn das Gespann rückwärts bewegt wird.

Die Verwendung einer Zugfeder hätte den weiteren Vorteil, daß sie als Stoßdämpfer wirken würde, der Spitzenbelastungen mildert.

Das eine Glied kann in sich starr sein und über ein sphärisches Schwenklager an dem Teil angreifen oder in sich verdrehbar sein und auf diese Weise eine Schwenkbewegung des Geräts um die Längsachse des Gespanns ermöglichen.

Beim Anschluß des Geräts an die Unterlenker eines Ackerschleppers, ist es zweckmäßig, wenn der Rahmen einen Anschlußbügel zum Anschluß an die Unterlenker des Zugfahrzeugs aufweist, von dem sich senkrecht eine Lagerwelle oder ein Lagerauge und waagrecht eine Platte mit einem Lagerauge oder einer Lagerwelle forterstreckt, und zwar derart, daß die durch die Lagerwelle und das Lagerauge verlaufenden Lagerachsen zueinander parallel verlaufen. Es ist zwar hinsichtlich der Fertigung einfacher, eine senkrechte Lagerwelle und ein in der waagrechten Platte gelegenes Lagerauge mit einem sphärischen Lager vorzusehen - dies ist aber nicht zwingend. Vielmehr kann die Anordnung auch umgekehrt vorgenommen werden oder zwei Lageraugen bzw. zwei Lagerwellen vorgesehen werden.

Eine gleichförmige und lineare Schwenkbewegung bei einer Bewegung um eine gemeinsame Schwenkachse ist von Vorteil, weil diese einfacher zu beherrschen ist; allerdings kann es auch zweckmäßig sein, wenn beide Glieder um zueinander versetzte Schwenkachsen schwenken, um ein besonderes Bewegungsverhalten des Rahmens um den Teil zu erreichen.

In einfacher und robuster Weise werden zwei Lagerstellen für die Glieder an dem Teil erzeugt, indem eine Hülse in den Teil eingeschweißt wird, in der eine Achse sicher gehalten wird. Diese Achse kann aus einem festen Rundstahl gefertigt und endseitig zur Aufnahme der Glieder ausgebildet werden.

Wenn es sich bei dem Gerät um ein mittels einer Gelenkwelle angetriebenes Gerät handelt, z. B. eine Mähmaschine, einen Feldhäcksler, ein Heuwerbungsgerät, eine Presse, und dergl., kann eine Ungleichförmigkeit im Lauf der Gelenkwelle beim Wenden, d. h. bei einer horizontalen Relativbewegung zwischen dem Gerät und dem Zugfahrzeug, nicht eintreten oder jedenfalls sehr gering gehalten werden, wenn geräteseitig ein Weitwinkeluniversalgelenk verwendet wird.

Ist der Mittelpunkt des Weitwinkeluniversalgelenks gegenüber der Schwenkachse des Rahmens an dem Teil versetzt, können auf diese Weise selbst bei großen Lenkeinschlägen des Zugfahrzeugs noch Ungleichförmigkeiten vermieden werden, weil dadurch der Schwenkwinkel des Weitwinkeluniversalgelenks geringer gehalten wird.

Die Möglichkeit, den Teil lösbar an das Gerät, normalerweise an dessen Deichsel, anzuschließen, macht die Anhängevorrichtung universell verwendbar.

In der Zeichnung ist ein nachfolgend näher beschriebenes Ausführungsbeispiel der Erfindung dargestellt. Es zeigt:
- Fig. 1: ein Gerät und ein Zugfahrzeug in schematischer Darstellung und in Draufsicht,
- Fig. 2: eine erfindungsgemäße Anhängevorrichtung zwischen dem Gerät und dem Zugfahrzeug in Seitenansicht und
- Fig. 3: die Anhängevorrichtung in Draufsicht.

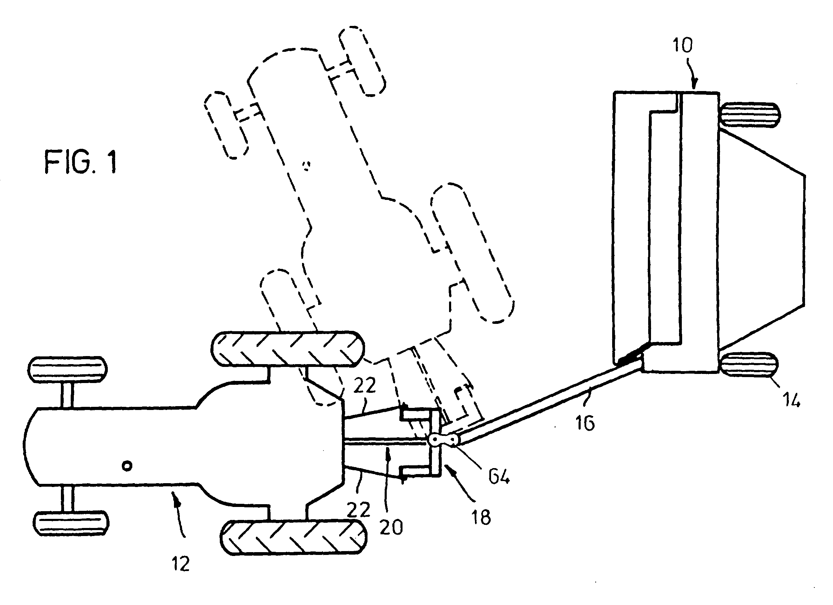

Gemäß Figur 1 ist ein Gerät 10 an ein Zugfahrzeug 12 angeschlossen und wird auf diese Weise während des Betriebs und beim Transport hinter dem Zugfahrzeug 12 hergezogen.

Das Gerät 10, das als Mähmaschine, Feldhäcksler, Heuwerbungsgerät, Presse, Spritzgerät, Bodenbearbeitungsgerät oder dergl., ausgebildet sein kann, und nicht notwendigerweise angetrieben werden muß, stützt sich über Räder 14 auf dem Boden ab und wird mittels einer Deichsel 16 und einer erfindungsgemäßen Anhängevorrichtung 18 an das Zugfahrzeug 10 angehängt. Wenn es sich bei dem Gerät 10 um ein antreibbares Gerät 10 handelt, ist zudem eine Gelenkwelle 20 vorgesehen, die den Antrieb von dem Zugfahrzeug 12 auf das Gerät 10 überträgt.

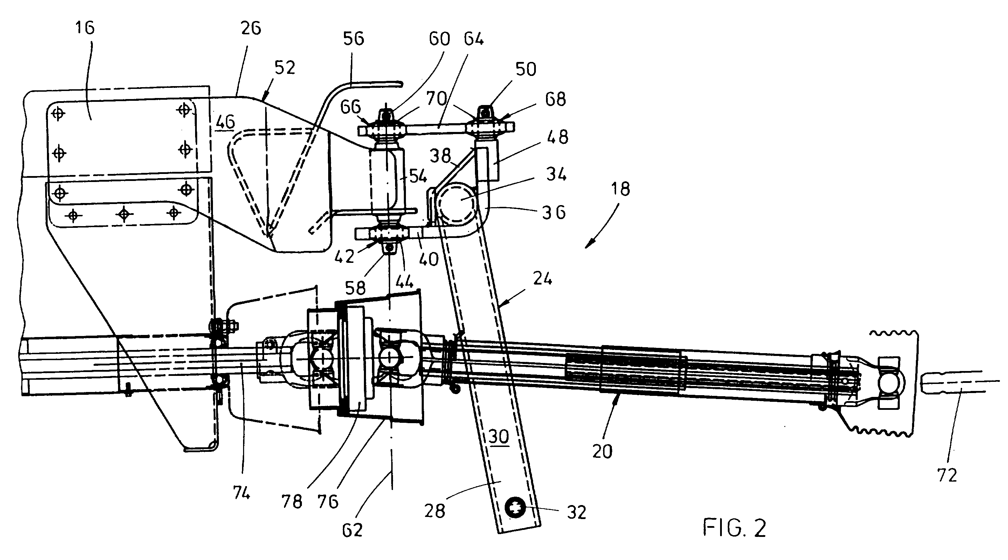

Das Zugfahrzeug 12 ist in der Regel ein Ackerschlepper mit Unterlenkern 22, die auf nicht gezeigte aber bekannte Weise vertikal bewegt werden können, um das Gerät 10 an seinem vorderen Ende anzuheben. Zwar ist bei herkömmlichen Gerätekupplungen, zu denen die Unterlenker 22 gehören, auch ein Oberlenker vorgesehen; dieser findet bei der Erfindung jedoch keine Anwendung und ist daher nicht gezeichnet. Es handelt sich mithin um eine 2-Punkt-Gerätekupplung. Zum evtl. Antrieb des Geräts 10 ist das Zugfahrzeug 12 an seinem rückwärtigen Bereich mit einer in Figur 2 gezeigten bekannten Zapfwelle 72 versehen, mit der die Gelenkwelle 20 drehfest verbunden werden kann.

Schließlich geht aus Figur 1 hervor, daß das aus dem Zugfahrzeug 12 und dem Gerät 10 gebildete Gespann nicht nur eine gestreckte, sondern auch eine geknickte Stellung einnehmen kann, wie dies beim Durchfahren einer Kurve der Fall ist.

Wenn dies auch nicht gezeigt ist, so ist doch offensichtlich, daß bei Bodenunebenheiten das Gerät 10 auch um die Längsachse des Gespanns kippen kann, bzw. die Anhängevorrichtung 18 in den Unterlenkern 22 vertikal schwenken kann.

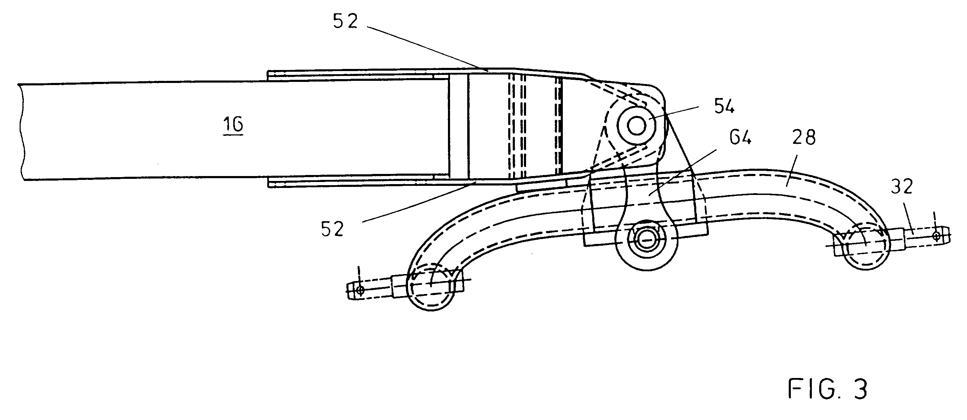

Bezüglich der Einzelheiten der Anhängevorrichtung 18 wird im folgenden auf die Figuren 2 und 3 verwiesen.

Gemäß Figur 2 enthält die Anhängevorrichtung 18 einen Rahmen 24 und einen Teil 26, die auf nachfolgend näher beschriebene Weise in mehreren Richtungen schwenkbar miteinander verbunden sind.

Der Rahmen 24 weist einen jochförmigen Anschlußbügel 28 auf, der ein nach unten offenes "U" bildet, dessen Schenkel 30 zwischen sich die gegebenenfalls vorgesehene Gelenkwelle 20 aufnehmen und von oben nach vorne unten geringfügig geneigt zu dem Zugfahrzeug 12 verlaufen, wobei man sich das Zugfahrzeug 12 am rechten Rand der Figur 2 vorstellen muß. Von dem unteren Bereich der Schenkel 30 erstrecken sich nach außen oder innen horizontale Bolzen 32, die dem Anschluß der Anhängevorrichtung 18 an das Zugfahrzeug 12 dienen. Allerdings sind auch andere Anschlußmittel denkbar, insbesondere solche, die von Schnellkupplern aufgenommen werden können. Ein die beiden Schenkel 30 verbindender oben gelegener Steg 34, wird von einer Winkelkonsole 36 umgriffen und mittels eingeschweißter Laschen 38 in deren Eckbereich starr befestigt.

Die Winkelkonsole 36, die aus einem festen Stahlblech gebogen wird, enthält ein sich waagrecht von dem Steg 34 nach hinten fort erstreckendes plattenartiges Glied 40, das in seinem freien Endbereich mit einem sphärischen Lager 42 versehen ist, wobei das sphärische Lager 42 von einer eine zentrische Öffnung aufweisenden Kugel 44 gebildet wird, die in einer Pfanne in dem Glied 40 unverlierbar gehalten ist und in verschiedenen Richtungen schwenken kann. Andererseits erstreckt sich rechtwinklig zu dem Glied 40 eine senkrechte Wand 46 nach oben, die in ihrem oberen Endbereich mit einer Büchse 48 verschweißt ist. In die Büchse 48 ist eine zapfenartige Lagerachse 50 vorzugsweise drehfest eingesetzt.

Der Teil 26 besteht aus zwei vertikalen Wänden 52, die seitlich an die Deichsel 16 lösbar angeschlossen sind und sich in ihrem vorderen Endbereich in der vertikalen Richtung verjüngen und in der horizontalen Richtung aufeinander zu gebogen sind. In dem vorderen Endbereich ist eine senkrecht ausgerichtete Hülse 54 mit den beiden Wänden 52 verschweißt. Etwas hinter der Hülse 54, d. h. mit Blick auf Figur 2 nach links versetzt, ist an den Innenseiten der Wände 52 ein Versteifungsblech 56 angeschweißt, das sich dachförmig nach oben bis über die Hülse 54 erstreckt und unter anderem der Befestigung nicht gezeigter Hydraulik- und/oder Elektroleitungen dient. Aus der Hülse 54 erstreckt sich nach unten und nach oben jeweils eine Lagerachse 58 und 60, die in der einfachsten Form einteilig ausgebildet sind und reib- oder formschlüssig unverlierbar in der Hülse 54 gehalten werden. An dem aus der Hülse 54 herausragenden Endbereich sind die Lagerachsen 58, 60 jeweils von einer Bohrung radial durchsetzt, in die ein Sicherungssplint eingesetzt werden kann, was allerdings der Übersichtlichkeit wegen nicht im einzelnen dargestellt ist. Die beiden Lagerachsen 58, 60 definieren eine gemeinsame, vertikal verlaufende Schwenkachse 62, die die Knickstelle des Gespanns darstellt.

Ein anderes Glied 64, das aus einer Stahlplatte geschnitten und bei diesem Ausführungsbeispiel in der Art einer "8" geformt ist, ist in beiden Endbereichen mit einem sphärischen Lager 66, 68 versehen, das ebenfalls aus einer in eine Pfanne unverlierbar eingesetzten in mehreren Richtungen beweglichen Kugel 70 besteht. Der horizontale Abstand zwischen beiden Lagern 66, 68 entspricht dem horizontalen Abstand zwischen dem Lager 42 und der Lagerachse 50. Zudem sind die Lager 66, 68 so ausgebildet, daß sie die Lagerachsen 50 und 60 in sich vorzugsweise beweglich aufnehmen können.

Aus Figur 2 ist ferner ersichtlich, daß die Gelenkwelle 20 die Verbindung zwischen der Zapfwelle 72 an dem Zugfahrzeug 12 und einer Antriebswelle 74 an dem Gerät 10 darstellt. Es ist zudem zu erkennen, daß der Anschluß der Gelenkwelle 20 an die Antriebswelle 74 über ein Weitwinkeluniversalgelenk 76 erfolgt. Der Mittelpunkt des Weitwinkeluniversalgelenks 76, d. h. der zwischen zwei Universalgelenken gelegenen Verbindungsscheibe 78 weist zu der Schwenkachse 62 einen horizontalen Versatz nach hinten um ca. 100 mm auf.

Aus der bisherigen Beschreibung geht folgende Funktion hervor.

Während der Fahrt werden die Zugkräfte von den Unterlenkern 22 über den Rahmen 24 und die beiden Glieder 40 und 64 auf den Teil 26 und von dort auf die Deichsel 16 übertragen. Die Gewichtskraft der Deichsel 16 wird dabei von dem unten gelegenen Glied 40 aufgenommen.

Wenn das Gespann eine Kurve durchfährt und einknickt, findet eine Schwenkbewegung der beiden Glieder 40, 64 um die Schwenkachse 62 statt.

In dem Fall, daß das Gerät 10 gegenüber dem Zugfahrzeug 12 in der vertikalen Ebene kippt, schwenken die Bolzen 32 in den Unterlenkern 22, d. h. der Rahmen 24 kippt vertikal gegenüber dem Zugfahrzeug 12.

Führt eine Bodenunebenheit dazu, daß das Gerät 10 um die Längsachse des Gespanns gegenüber dem Zugfahrzeug 12 schwenkt, finden folgende Bewegungen statt. Der Rahmen 24 kippt mit dem Glied 40 um die Kugel 44 des sphärischen Lagers 42 in einer Ebene quer zu der Fahrtrichtung. Gleichzeitig schwenkt das andere Glied 64 in den beiden Lagern 66, 68 um die Längsachsen der Lagerachsen 50 und 60 in einer im wesentlichen horizontalen Ebene. Allerdings wird sich dabei das mit der Lagerachse 50 verbundene Ende des Glieds 64 geringfügig nach unten bewegen. Demnach wirkt die Verbindung des Rahmens 24 mit dem Teil 26 wie ein einziges Kardangelenk, das in beliebigen Richtungen beweglich ist.

Es ist erkennbar, daß das andere Glied 64 insbesondere dazu dient, den Rahmen 24, der um die Kugel 44 vertikal schwenkbar ist, an dem Teil 26 gegen diese vertikale Schwenkbewegung abzustützen. Bei dem dargestellten Ausführungsbeispiel erfolgt diese Abstützung auf Druck, weil sich der Anschlußpunkt des einen Glieds 40 unterhalb des Teils 26 befindet.

Nach einem anderen, nicht dargestellten Ausführungsbeispiel ist vorgesehen, das eine starr mit dem Rahmen 24 verbundene Glied 40 mit der oberen Lagerachse 60 zu verbinden und die Gewichtskraft mittels eines durch die in diesem vorgesehene Bohrung eingesetzten Bolzens aufzunehmen. Anstelle des anderen Glieds 64, wird eine Kette, ein Seil oder gar eine sehr starke Zugfeder zwischen dem Teil 26 und dem Rahmen 24 eingespannt. Dieses Glied würde sich dann unterhalb des Teils 26 und gegebenenfalls von der unteren Lagerachse 58 bis zu dem Rahmen 24 erstrecken und wäre auf Zug beansprucht. Anders als bei einer Zugfeder, die im Druckbetrieb auf Block geht, sollte bei einer Kette oder einem Seil ein Anschlag für den Rahmen an dem Teil vorgesehen werden, damit das Gespann auch problemlos rückwärts gefahren werden kann. Der Bewegungsablauf ist analog dem des dargestellten Ausführungsbeispiels.

## Patentansprüche

1. Anhängevorrichtung (18) für ein gezogenes Gerät (10) mit einem Rahmen (24) zum vertikal schwenkbaren Anschluß an ein und gegenüber einem Zugfahrzeug (12) und einem Teil (26) zum Anschluß an das Gerät (10), wobei:
a) der Rahmen (24) mit zwei Gliedern (40, 64) an übereinander gelegenen Lagerstellen des Teils (26) horizontal schwenkbar angreift, dadurch gekennzeichnet, daß
b) das eine Glied (40) mit dem Rahmen (24) starr und mit dem Teil (26) horizontal und vertikal schwenkbar verbunden ist;
c) das andere Glied (64) an dem Rahmen (24) und an dem Teil (26) horizontal und vertikal schwenkbar angreift.

2. Anhängevorrichtung nach Anspruch 1, dadurch gekennzeichnet, daß das andere Glied (64) ein Kippmoment des Rahmens (24) gegenüber dem Teil (26) auffängt, in sich starr ist und mittels sphärischer Lager (66, 68) an dem Rahmen (24) und dem Teil (26) angreift.

3. Anhängevorrichtung nach Anspruch 1, dadurch gekennzeichnet, daß das andere Glied (64) das Kippmoment des Rahmens (24) gegenüber dem Teil (26) auffängt und als Seil, Kette oder dergleichen Glied, das nicht verlängerbar und in sich verdrehbar ist, oder als eine Zugfeder ausgebildet ist.

4. Anhängevorrichtung nach einem oder mehreren der vorherigen Ansprüche, dadurch gekennzeichnet, daß das eine Glied (40) die Gewichtskraft aufnimmt und mittels eines sphärischen Lagers (42) an dem Teil (26) angreift.

5. Anhängevorrichtung nach einem oder mehreren der vorherigen Ansprüche, dadurch gekennzeichnet, daß der Rahmen (24) einen Anschlußbügel (28) zum Anschluß an Unterlenker (22) des Zugfahrzeugs (12) aufweist, von dem sich senkrecht eine Lagerachse (50) oder ein Lagerauge und waagrecht eine Platte mit einem Lagerauge (22) oder eine Lagerachse fort erstreckt, wobei die durch die Lagerachse(n) (50) bzw. Lagerauge(n) (22) verlaufenden Achsen zueinander parallel verlaufen.

6. Anhängevorrichtung nach einem oder mehreren der vorherigen Ansprüche, dadurch gekennzeichnet, daß der Teil (26) eine obere und eine untere Lagerachse (60, 58) oder Lagerauge aufweist, die vertikal miteinander fluchten und die Glieder (40, 64) schwenkbar aufnehmen.

7. Anhängevorrichtung nach Anspruch 6, dadurch gekennzeichnet, daß die Lagerachsen (58, 60) einteilig ausgebildet und in einer mit dem Teil (26) verschweißten Hülse (54) lagegesichert sind.

8. Anhängevorrichtung nach einem oder mehreren der vorherigen Ansprüche für ein mittels einer Gelenkwelle (20) antreibbares Gerät (10), dadurch gekennzeichnet, daß die Gelenkwelle (20) wenigstens geräteseitig ein Weitwinkeluniversalgelenk (76) aufweist.

9. Anhängevorrichtung nach Anspruch 8, dadurch gekennzeichnet, daß der Mittelpunkt des Weitwinkeluniversalgelenks (76) zu der Schwenkachse (62) der Glieder (40, 64) an dem Teil (26) einen horizontalen Versatz zu dem Gerät (10) hin aufweist.

10. Anhängevorrichtung nach einem oder mehreren der vorherigen Ansprüche, dadurch gekennzeichnet, daß der Teil (26) an dem Gerät (10), insbesondere an dessen Deichsel (16), lösbar anschließbar ist.

## Claims

1. A hitch device (18) for a towed implement (10) with a frame (24) for vertically pivotal attachment to and relative to a towing vehicle (12) and a part (26) for attachment to the apparatus (10), wherein:
a. the frame (24) engages horizontally pivotally at bearing points of the part (26) disposed above one another by means of two members (40, 64), characterized in that
b. the one member (40) is connected rigidly to the frame (24) and horizontally and vertically pivotally to the part (26);
c. the other member (64) is connected horizontally and vertically pivotally to the frame (24) and to the part (26).

2. A hitch device according to claim 1, characterized in that the other member (64) absorbs a tilting moment of the frame (24) relative to the part (26), is in itself rigid and engages the frame (24) and the part (26) by means of spherical bearings (66, 68).

3. A hitch device according to claim 1, characterized in that the other member (64) absorbs the tilting moment of the frame (24) relative to the part (26) and is in the form of a cable, chain or the like member which is not extensible and can twist, or in the form of a tension spring.

4. A hitch device according to one or more of the preceding claims, characterized in that the one member (40) absorbs the weight and engages the part (26) through a spherical bearing (42).

5. A hitch device according to one or more of the preceding claims, characterized in that the frame (24) comprises a coupling yoke (28) for attachment to lower links (22) of the towing vehicle (12), from which a bearing axle (50) or a bearing eye extends vertically and from which a plate extends horizontally with a bearing eye (42) or a bearing axle, wherein the axes through the bearing axle/axles (50) or bearing eye(s) (42) run parallel to one another.

6. A hitch device according to one or more of the preceding claims, characterized in that the part (26) has an upper and a lower bearing axle (60, 58) which are in line vertically with one another and receive the members (40, 64) pivotally.

7. A hitch device according to claim 6, characterized in that the bearing axles (58, 60) are formed in one part and are secured in position in a sleeve (54) welded to the part (26).

8. A hitch device according to one or more of the preceding claims for an implement (10) driven by means of PTO shaft (20), characterized in that the PTO shaft (20) has a wide-angle universal joint (76) at least at the implement end.

9. A hitch device according to claim 8, characterized in that the middle point of the wide angle universal joint (76) has a horizontal offset towards the implement (10) relative to the pivotal axis (62) of the members (40, 64) on the part (26).

10. A hitch device according to one or more of the preceding claims, characterized in that the part (26) can be connected releasably to the implement (10), in particular to the hitch bar (16) thereof.

## Revendications

1. Dispositif d'attelage (18) pour un appareil tracté (10) comportant un cadre (24) permettant le raccordement, avec possibilité de pivotement vertical, à et par rapport à un véhicule tracteur (12) et une partie (26) pour le raccordement à l'appareil (10), dans lequel
a) le cadre (24) attaque au moyen de deux organes (40,64), avec possibilité de pivotement horizontal, des points de support superposés de la partie (26),
caractérisé en ce que
b) un organe (40) est relié rigidement au cadre (24) et est relié avec possibilité de pivotement horizontal et vertical à la partie (26) ;
c) l'autre organe (64) attaque le cadre (24) et la partie (26) avec possibilité de pivotement horizontal et vertical.

2. Dispositif d'attelage selon la revendication 1, caractérisé en ce que l'autre organe (64) supporte un moment de basculement du cadre (24) par rapport à la partie (26), est en soi rigide et attaque au moyen de paliers sphériques (66,68) le cadre (24) et la partie (26).

3. Dispositif d'attelage selon la revendication 1, caractérisé en ce que l'autre organe (64) supporte le moment de basculement du cadre (24) par rapport à la partie (26) et est agencé en forme de câble, de chaîne ou d'un organe de ce type, qui ne peut pas s'allonger et peut tourner sur lui-même, ou bien sous la forme d'un ressort de traction.

4. Dispositif d'attelage selon une ou plusieurs des revendications précédentes, caractérisé en ce qu'un organe (40) supporte la force du poids et attaque la partie (26) au moyen d'un palier sphérique (42).

5. Dispositif d'attelage selon une ou plusieurs des revendications précédentes, caractérisé en ce que le cadre (24) comporte un étrier de raccordement (28) destiné à être raccordé à un bras articulé inférieur (22) du véhicule tracteur (12), à partir duquel un axe de palier (50) ou un oeillet de palier s'étend verticalement et qu'une plaque comportant un oeillet de palier (42) ou un axe de palier s'étend horizontalement, les axes, qui sont confondus avec le ou les axes de palier (50) ou passent par le ou les oeillets de palier (42) étant parallèles entre eux.

6. Dispositif d'attelage selon une ou plusieurs des revendications précédentes, caractérisé en ce que la partie (26) possède un axe de palier supérieur et un axe de palier inférieur (60,58) ou un oeillet de palier supérieur et un oeillet de palier inférieur, qui sont alignés entre eux verticalement et reçoivent avec possibilité de pivotement les organes (40, 64).

7. Dispositif d'attelage selon la revendication 6, caractérisé en ce que les axes de palier (58, 60) sont agencés d'un seul tenant et sont bloqués en position dans une douille (54) soudée à la partie (26).

8. Dispositif d'attelage selon une ou plusieurs des revendications précédentes, pour un appareil (10), qui peut être entraîné au moyen d'un arbre d'articulation (20), caractérisé en ce que l'arbre d'articulation (20) comporte, au moins côté appareil, un joint universel à grand angle (76).

9. Dispositif d'attelage selon la revendication 8, caractérisé en ce que le centre du joint universel à grand angle (76) possède par rapport à l'axe de pivotement' (62) des organes (40,64), sur la partie (26), un décalage par rapport à l'appareil.

10. Dispositif d'attelage selon une ou plusieurs des revendications précédentes, caractérisé en ce que la partie (26) peut être raccordée de façon amovible à l'appareil (10), notamment à son timon (16).
